# FASCICULE DE BREVET EUROPEEN

(11) **EP 3 729 221 B1**
(45) Date de publication et mention de la délivrance du brevet: **31.08.2022**
(21) Numéro de dépôt: 18830915.7
(22) Date de dépôt: 05.12.2018
(51) Int. Cl.: G05D 1/00, B60W 50/14

(54) **DISPOSITIF DE CONTRÔLE D'UNE FONCTION DE CONDUITE AUTONOME D'UN VÉHICULE, À PHASE INTERMÉDIAIRE DE DÉSACTIVATION**
VORRICHTUNG ZUM STEUERN EINER AUTONOMEN FAHRFUNKTION EINES FAHRZEUGS MIT EINER ZWISCHENZEITLICHEN ABSCHALTPHASE
DEVICE FOR CONTROLLING AN AUTONOMOUS DRIVING FUNCTION OF A VEHICLE, WITH AN INTERMEDIATE DEACTIVATION PHASE

(30) Priorité: 21.12.2017 FR 1762787
(43) Date de publication de la demande: 28.10.2020
(73) Titulaire: PSA Automobiles SA, 78300 Poissy (FR)
(72) Inventeur: FERON, Stephane, 92350 LE PLESSIS ROBINSON (FR); RAMPILLON, Felicie, 75014 PARIS 14 (FR); TACCORI DUVERGEY, Celine, 92120 MONTROUGE (FR); LAINE, Vincent, 78340 LES CLAYES SOUS BOIS (FR)
(86) Numéro de dépôt international: PCT/FR2018/053109
(87) Numéro de publication internationale: WO 2019/122568

(56) Documents cités:
- WO-A1-2016/109765
- WO-A1-2016/199379
- DE-A1-102013 110 909
- DE-A1-102014 118 958

## Description

L'invention concerne les véhicules à conduite partiellement autonome, et plus précisément les dispositifs de contrôle qui sont destinés à contrôler l'activation/désactivation de la fonction de conduite autonome au sein de tels véhicules.

Certains véhicules, généralement de type automobile, offrent une fonction de conduite autonome qui, lorsqu'elle est activée, permet à un dispositif d'assistance embarqué de contrôler leur conduite (tant en dynamique qu'en trajectoire), sans intervention de leur conducteur.

L'activation/désactivation d'une telle fonction est réalisée par le conducteur du véhicule par action sur un organe de commande. Plus précisément, cet organe de commande génère une première commande propre à activer la fonction de conduite autonome lorsqu'il est actionné par le conducteur, et génère une seconde commande déclenchant une procédure de désactivation de cette fonction de conduite autonome lorsqu'il est de nouveau actionné par le conducteur. Si après le second actionnement (de désactivation) le conducteur ne reprend pas rapidement le contrôle du véhicule (par exemple en ne saisissant pas rapidement le volant du véhicule avec au moins une main et/ou en n'exerçant pas rapidement une pression sur au moins une pédale), une stratégie de repli est automatiquement mise en œuvre par le dispositif d'assistance car il est considéré que le conducteur n'est pas apte à conduire le véhicule alors qu'il l'a demandé.

Cette stratégie de repli consiste à effectuer une mise en sécurité qui peut varier en fonction des dispositifs d'assistance et des plages d'usage de ces derniers. Ainsi, elle peut, par exemple, consister à ralentir notablement la vitesse du véhicule et/ou à garer le véhicule le plus rapidement possible.

Afin d'éviter que la stratégie de repli soit déclenchée du fait de l'omission par le conducteur de la reprise du contrôle (ou en main) du véhicule (réalisation de l'une au moins des deux opérations précitées (main(s)/pied), on diffuse dans le véhicule une alerte sonore juste après le second actionnement de désactivation.

Cette solution présente au moins trois inconvénients. En effet, si le conducteur a actionné l'organe de commande sans s'en apercevoir ou si l'organe de commande est défectueux et a généré une seconde commande sans intervention du conducteur, ce dernier peut ne pas comprendre la raison de la diffusion de cette alerte sonore, et donc peut ne pas effectuer les deux opérations précitées ce qui va déclencher inutilement la stratégie de repli. De plus, elle impose d'importantes contraintes de sûreté de fonctionnement à l'organe de commande pour éviter qu'il devienne défectueux, ce qui augmente notablement son coût et sa complexité. Enfin, elle ne laisse pas de droit à l'erreur au conducteur.

On connait par le document WO2016/199379 un procédé permettant un passage en mode de conduite manuelle lorsque le conducteur se trouve dans une situation adaptée à une opération de conduite. Une unité d'entrée reçoit une entrée d'un signal sur la base de l'action du conducteur. Une unité d'envoi envoie à l'unité de commande de conduite automatique un signal de commutation ordonnant la commutation au mode de conduite manuelle lorsque la différence entre une valeur obtenue à partir d'un signal sur la base de l'action du conducteur entrée à partir de l'unité d'entrée et une valeur de référence correspondant à la requête d'action se trouve dans une plage admissible.

L'invention a donc notamment pour but d'améliorer la situation.

Elle propose notamment à cet effet un dispositif de contrôle, destiné à contrôler l'activation/désactivation d'une fonction de conduite autonome au sein d'un véhicule à conduite partiellement autonome, et comprenant un organe de commande générant une première commande propre à activer cette fonction lorsqu'il est actionné par un conducteur du véhicule.

Ledit organe de commande génère une seconde commande lorsqu'i est actionné par le conducteur quand la fonction de conduite autonome est active.

Ledit dispositif
comprend des moyens de contrôle qui, lorsqu'ils reçoivent cette seconde commande, déclenchent la fourniture d'au moins un message signalant au conducteur chaque opération à effectuer pour reprendre le contrôle au moins partiel de la conduite, puis autorisent cette reprise de contrôle lorsque chaque opération signalée a été effectuée par le conducteur.

Ce dispositif se caractérise par le fait que lesdits moyens de contrôle déclenchent la fourniture d'au moins un message signalant audit conducteur de saisir un volant dudit véhicule avec au moins une main et d'exercer une pression sur au moins une pédale dudit véhicule lorsque ledit véhicule circule à une vitesse inférieure à un seuil prédéfini.

Grâce à l'invention, si le conducteur a actionné l'organe de commande sans s'en apercevoir ou involontairement, ou bien si l'organe de commande est défectueux et a généré inopinément une seconde commande, le conducteur n'a pas besoin de se préoccuper du message qui lui est fourni.

Le dispositif de contrôle selon l'invention peut comporter d'autres caractéristiques qui peuvent être prises séparément ou en combinaison, et notamment :
- ses moyens de contrôle peuvent autoriser la reprise de contrôle lorsque chaque opération signalée a été effectuée par le conducteur dans un intervalle de temps prédéfini ;
   ➢ cet intervalle de temps prédéfini peut être compris entre zéro seconde et dix secondes
- ses moyens de contrôle peuvent déclencher la fourniture d'un message de type textuel à afficher par au moins un écran d'affichage du véhicule et/ou d'un message de type audio à diffuser par au moins un haut-parleur du véhicule, lorsqu'ils reçoivent la seconde commande ;
- son organe de commande peut être choisi parmi un bouton poussoir, une molette, un levier, une palette, deux palettes, et une touche tactile.

L'invention propose également un véhicule, éventuellement de type automobile, offrant une fonction de conduite autonome, et comportant un dispositif de contrôle du type de celui présenté ci-avant.

D'autres caractéristiques et avantages de l'invention apparaîtront à l'examen de la description détaillée ci-après, et des dessins annexés, sur lesquels :
- la figure 1 illustre schématiquement et fonctionnellement un exemple de véhicule automobile comprenant un dispositif d'assistance, un écran d'affichage, des haut-parleurs et un exemple de réalisation d'un dispositif de contrôle selon l'invention, et
- la figure 2 illustre schématiquement un exemple d'algorithme d'activation/désactivation de la fonction de commande autonome d'un véhicule en présence d'un dispositif de contrôle selon l'invention.

L'invention a notamment pour but de proposer un dispositif de contrôle DC destiné à contrôler l'activation/désactivation d'une fonction de conduite autonome au sein d'un véhicule V à conduite partiellement autonome.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule à conduite partiellement autonome, et notamment les véhicules terrestres, maritimes (ou fluviaux), et aériens.

On entend ici par « véhicule à conduite partiellement autonome (ou automatisée) », un véhicule pouvant être conduit par son conducteur pendant une phase de conduite manuelle ou de façon automatisée (et donc sans intervention de son conducteur) pendant une phase de conduite autonome.

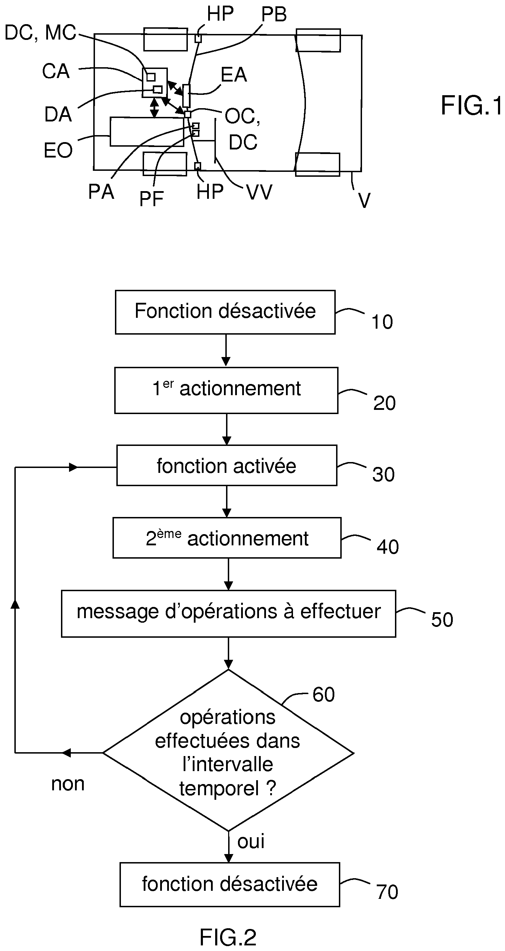

On a schématiquement et fonctionnellement représenté sur la figure 1 un véhicule automobile V (ici une voiture) comprenant un dispositif d'assistance DA, un écran d'affichage EA, des haut-parleurs HP et un exemple de réalisation d'un dispositif de contrôle DC selon l'invention.

On notera qu'afin que l'invention puisse être mise en œuvre, il n'est pas nécessaire que le véhicule V comprenne à la fois au moins un écran d'affichage EA et au moins un haut-parleur HP dans son habitacle. Il suffit en effet qu'il ait au moins un écran d'affichage EA ou au moins un haut-parleur HP dans son habitacle.

Dans l'exemple illustré non limitativement sur la figure 1, l'écran d'affichage EA fait partie du combiné central qui est installé en position centrale dans ou sur la planche de bord PB du véhicule V. Mais il pourrait faire partie du tableau de bord.

Le dispositif d'assistance DA est chargé d'assurer une fonction de conduite autonome au sein du véhicule V lorsque cette dernière a été activée, afin de contrôler sa conduite en dynamique comme en trajectoire, sans intervention de son conducteur sur son volant VV et sur ses pédale de frein PF et pédale d'accélérateur PA. Par exemple, il peut constituer ce que l'homme de l'art appelle un dispositif ADAS (« Advanced Driver Assistance System »).

Un tel dispositif d'assistance DA comprend des moyens d'analyse chargés d'analyser des images et informations acquises par des moyens d'acquisition embarqués dans le véhicule V et représentatives de son environnement extérieur, et des moyens de contrôle chargés de déterminer une trajectoire du véhicule V en fonction du résultat de cette analyse d'images et d'informations, et des commandes pour un ensemble EO d'organes propres à faire suivre au véhicule V cette trajectoire déterminée en contrôlant à chaque instant sa vitesse. Les organes de cet ensemble EO, impliqués dans les déplacements du véhicule V, comprennent notamment le groupe motopropulseur (ou GMP), le système de freinage, la direction assistée électrique et les moyens de changement de vitesse (par exemple une boîte de vitesses automatique).

Comme illustré non limitativement sur la figure 1, le dispositif d'assistance DA peut, par exemple, être implanté dans un calculateur CA du véhicule V, qui assure éventuellement au moins une autre fonction, comme par exemple la supervision du fonctionnement de la chaîne de transmission. Mais en variante il peut comprendre son propre calculateur dédié. Par conséquent, le dispositif d'assistance DA peut être réalisé sous la forme de modules logiciels (ou informatiques ou encore « software »), ou bien d'une combinaison de circuits électroniques (ou « hardware ») et de modules logiciels.

Comme illustré sur la figure 1, un dispositif de contrôle DC, selon l'invention, comprend un organe de commande OC et des moyens de contrôle MC.

L'organe de commande OC est chargé de générer une première commande propre à activer (« on ») la fonction de conduite autonome du dispositif d'assistance DA lorsqu'il est actionné par le conducteur du véhicule V, et une seconde commande lorsqu'il est de nouveau actionné par ce conducteur quand la fonction de conduite autonome est active.

On entend ici par « actionner » aussi bien le fait de toucher (ou contacter) que le fait d'appuyer (ou exercer une pression) ou d'entraîner en rotation ou en translation.

On notera que les première et seconde commandes peuvent être analogiques ou numériques, et peuvent être éventuellement identiques.

Cet organe de commande OC peut, par exemple, être un bouton poussoir (ou « push »). Mais il pourrait également s'agir d'une molette, d'un levier, d'une palette, de deux palettes, ou d'une touche tactile (ou sensitive).

Par ailleurs, cet organe de commande OC peut, par exemple, être installé dans la planche de bord PB, comme illustré non limitativement. Il peut également faire partie d'une interface homme/machine installée dans la planche de bord PB sous ou à côté de l'écran d'affichage EA et faisant éventuellement partie du combiné central ou bien être placé sur le volant.

Les moyens de contrôle MC (du dispositif de contrôle DC) sont agencés, lorsqu'ils reçoivent une seconde commande générée par l'organe de commande OC, de manière à déclencher la fourniture d'au moins un message signalant au conducteur chaque opération à effectuer pour reprendre le contrôle au moins partiel de la conduite, puis à autoriser cette reprise de contrôle lorsque chaque opération signalée a été effectuée par le conducteur.

En d'autres termes, lorsque les moyens de contrôle MC reçoivent une seconde commande (de désactivation (« off ») de la fonction de conduite autonome), ils déclenchent une phase intermédiaire pendant laquelle, d'une part, ils rappellent au conducteur chaque opération qu'il doit impérativement effectuer afin que le dispositif d'assistance DA lui redonne le contrôle de la conduite du véhicule V, et, d'autre part, le conducteur doit impérativement effectuer chacune de ces opérations rappelées. Ce n'est seulement qu'une fois que le conducteur a effectué chacune de ces opérations rappelées que les moyens de contrôle MC déclenchent la phase de désactivation de la fonction de conduite autonome auprès du dispositif d'assistance DA, afin que le conducteur reprenne le contrôle de la conduite.

On notera que de préférence les moyens de contrôle MC autorisent la reprise de contrôle lorsque chaque opération signalée (ou rappelée) a été effectuée par le conducteur dans un intervalle de temps prédéfini. Ce dernier est déclenché une fois que le conducteur a été informé des opérations à effectuer pour désactiver la fonction de conduite autonome.

Par exemple, cet intervalle de temps prédéfini peut être compris entre zéro seconde et dix secondes. A titre d'exemple il peut être égal à cinq secondes.

Si à l'expiration de l'intervalle de temps prédéfini le conducteur n'a pas effectué toutes les opérations signalées (ou rappelées), la phase intermédiaire prend fin et la seconde commande générée par l'organe de commande OC n'est pas prise en compte. Par conséquent, la fonction de conduite autonome demeure active (ou « on »).

Ainsi, si le conducteur a actionné l'organe de commande sans s'en apercevoir ou involontairement, ou bien si l'organe de commande est défectueux et a généré une seconde commande sans intervention du conducteur, ce dernier n'a pas besoin de se préoccuper du message qui lui est fourni. Il lui suffit de ne rien faire de particulier et la phase de conduite autonome en cours va se poursuivre sans interruption et sans qu'une stratégie de repli soit déclenchée. Le conducteur a donc désormais le droit à l'erreur.

De plus, une défectuosité de l'organe de commande OC se traduisant par la génération inopinée d'une seconde commande (éventuellement en présence de secousses) n'est plus gênante, puisqu'elle ne provoquera plus le déclenchement d'une stratégie de repli. Par conséquent, les contraintes de sûreté de fonctionnement de l'organe de commande OC sont notablement réduites, ce qui permet de réduire notablement son coût et sa complexité.

Selon l'invention, pendant la phase intermédiaire les moyens de contrôle MC déclenchent la fourniture d'au moins un message signalant au conducteur de saisir le volant VV avec au moins une main et d'exercer une pression sur au moins une pédale (de frein PF ou d'accélérateur PA selon la situation) lorsque le véhicule V circule à une vitesse inférieure à un seuil prédéfini. Ce seuil prédéfini est par exemple compris entre 5 km/h et 15 km/h. Le(s) message(s) fourni(s) peu(ven)t éventuellement signaler aussi au conducteur d'actionner l'organe de commande OC pour mettre fin au mode autonome.

La saisie du volant VV par au moins une main est détectée par au moins un capteur intégré dans le volant VV et/ou une caméra d'observation installée dans l'habitacle. L'exercice d'une pression sur une pédale de frein PF ou d'accélérateur PA est détecté par un capteur. Ces informations sont facilement accessibles dans le véhicule V, par exemple via un réseau de communication embarqué, éventuellement de type multiplexé.

On notera également que les moyens de contrôle MC peuvent déclencher la fourniture d'un message de type textuel à afficher par au moins un écran d'affichage EA et/ou d'un message de type audio à diffuser par au moins un haut-parleur HP, lorsqu'ils reçoivent la seconde commande. En d'autres termes, selon l'option installée dans le véhicule V, les moyens de contrôle MC peuvent soit fournir un unique message textuel qui est alors affiché par au moins un écran d'affichage EA, soit fournir un unique message audio qui est alors diffusé par au moins un haut-parleur HP, soit encore fournir un message textuel qui est alors affiché par au moins un écran d'affichage EA et un message audio qui est alors diffusé par au moins un haut-parleur HP, de préférence en même temps que le message textuel est affiché.

La diffusion d'un message audio par au moins un haut-parleur HP nécessite que le véhicule V comprenne des moyens de synthèse vocale.

Comme illustré non limitativement sur la figure 1, les moyens de contrôle MC peuvent, par exemple, être implantés dans le calculateur CA. Mais en variante ils pourraient être implantés dans, ou comprendre, un calculateur dédié faisant éventuellement partie du dispositif de contrôle DC. Par conséquent, les moyens de contrôle MC peuvent être réalisés sous la forme de modules logiciels, ou bien d'une combinaison de circuits électroniques et de modules logiciels.

On a schématiquement illustré sur la figure 2 un exemple d'algorithme d'activation/désactivation de la fonction de commande autonome du véhicule V en présence du dispositif de contrôle DC.

L'algorithme commence par une étape 10 dans laquelle la fonction de conduite autonome est désactivée.

Puis, dans une étape 20, le conducteur du véhicule V effectue un premier actionnement de l'organe de commande OC du dispositif de contrôle DC. Cela provoque dans une étape 30 l'activation de la fonction de conduite autonome, et donc la conduite du véhicule V est contrôlée automatiquement par son dispositif d'assistance DA.

Puis, dans une étape 40, le conducteur du véhicule V effectue un second actionnement de l'organe de commande OC du dispositif de contrôle DC. Cela provoque dans une étape 50 la fourniture d'au moins un message signalant au conducteur chaque opération à effectuer pour reprendre le contrôle au moins partiel de la conduite du véhicule V.

Puis, dans une étape 60 on détermine si le conducteur a réalisé dans l'intervalle de temps prédéfini chaque opération signalée dans le message. Dans la négative, on maintient activée la fonction de conduite autonome (retour à l'étape 30). En revanche, dans l'affirmative on désactive dans une étape 70 la fonction de conduite autonome, et c'est donc le conducteur qui contrôle de nouveau la conduite du véhicule V.

Grâce à l'invention, l'expérience du conducteur de l'utilisation des fonctions autonomes est améliorée alors que dans le même temps les contraintes techniques sur l'organe de commande sont réduites.

## Revendications

1. Dispositif de contrôle (DC) pour contrôler l'activation/désactivation d'une fonction de conduite autonome au sein d'un véhicule (V) à conduite partiellement autonome, ledit dispositif (DC) comprenant un organe de commande (OC) générant une première commande propre à activer ladite fonction lorsqu'il est actionné par un conducteur dudit véhicule (V), ledit organe de commande (OC) générant une seconde commande lorsqu'il est actionné par ledit conducteur quand ladite fonction de conduite autonome est active, et comprenant des moyens de contrôle (MC) qui, lorsqu'ils reçoivent ladite seconde commande, déclenchent la fourniture d'au moins un message signalant audit conducteur chaque opération à effectuer pour reprendre le contrôle au moins partiel de ladite conduite, puis autorisent ladite reprise de contrôle lorsque chaque opération signalée a été effectuée par ledit conducteur, **caractérisé en ce que** lesdits moyens de contrôle (MC) déclenchent la fourniture d'au moins un message signalant audit conducteur de saisir un volant (W) dudit véhicule (V) avec au moins une main et d'exercer une pression sur au moins une pédale dudit véhicule (V) lorsque ledit véhicule (V) circule à une vitesse inférieure à un seuil prédéfini.

2. Dispositif selon la revendication 1, **caractérisé en ce que** lesdits moyens de contrôle (MC) autorisent ladite reprise de contrôle lorsque chaque opération signalée a été effectuée par ledit conducteur dans un intervalle de temps prédéfini.

3. Dispositif selon la revendication 2, **caractérisé en ce que** ledit intervalle de temps prédéfini est compris entre zéro seconde et dix secondes.

4. Dispositif selon l'une des revendications précédentes, **caractérisé en ce que** lesdits moyens de contrôle (MC) déclenchent la fourniture d'au moins un message signalant également audit conducteur d'actionner ledit organe de commande (OC).

5. Dispositif selon l'une des revendications 1 à 4, **caractérisé en ce que** lesdits moyens de contrôle (MC) déclenchent la fourniture d'un message de type textuel à afficher par au moins un écran d'affichage (EA) dudit véhicule (V) et/ou d'un message de type audio à diffuser par au moins un haut-parleur (HP) dudit véhicule (V), lorsqu'ils reçoivent ladite seconde commande.

6. Dispositif selon l'une des revendications 1 à 5, **caractérisé en ce que** ledit organe de commande (OC) est choisi parmi un bouton poussoir, une molette, un levier, une palette, deux palettes, et une touche tactile.

7. Véhicule (V) offrant une fonction de conduite autonome, **caractérisé en ce qu'**il comprend un dispositif de contrôle (DC) selon l'une des revendications précédentes.

8. Véhicule selon la revendication 7, **caractérisé en ce qu'**il est de type automobile.

## Patentansprüche

1. Steuervorrichtung (DC) zur Steuerung der Aktivierung/Deaktivierung einer autonomen Fahrfunktion in einem teilweise autonom fahrenden Fahrzeug (V), wobei die Vorrichtung (DC) ein Steuerorgan (OC) umfasst, das einen ersten Befehl erzeugt, der geeignet ist, die Funktion zu aktivieren, wenn es von einem Fahrer des Fahrzeugs (V) betätigt wird, wobei das Steuerorgan (OC) einen zweiten Befehl erzeugt, wenn es von dem Fahrer betätigt wird, wenn die autonome Fahrfunktion aktiv ist, und Steuermittel (MC) umfasst, die, wenn sie den zweiten Befehl empfangen, eine Handlung ausführen, die Lieferung mindestens einer Nachricht auslösen, die dem Fahrer jede Operation signalisiert, die er ausführen muss, um die Kontrolle über das Fahren zumindest teilweise wiederzuerlangen, und dann die Wiederaufnahme der Kontrolle erlauben, wenn jede signalisierte Operation von dem Fahrer ausgeführt wurde, **dadurch gekennzeichnet, dass** die Steuermittel (MC) die Lieferung mindestens einer Nachricht auslösen, die dem Fahrer signalisiert, ein Lenkrad (VV) des Fahrzeugs (V) mit mindestens einer Hand zu ergreifen und Druck auf mindestens ein Pedal des Fahrzeugs (V) auszuüben, wenn das Fahrzeug (V) mit einer Geschwindigkeit fährt, die unter einem vordefinierten Schwellenwert liegt.

2. Vorrichtung nach Anspruch 1, **dadurch gekennzeichnet, dass** die Kontrollmittel (MC) die Wiederaufnahme der Kontrolle erlauben, wenn jeder gemeldete Vorgang von dem Fahrer innerhalb eines vordefinierten Zeitintervalls durchgeführt wurde.

3. Vorrichtung nach Anspruch 2, **dadurch gekennzeichnet, dass** das vordefinierte Zeitintervall zwischen null Sekunden und zehn Sekunden liegt.

4. Vorrichtung nach einem der vorhergehenden Ansprüche, **dadurch gekennzeichnet, dass** die Steuermittel (MC) die Bereitstellung mindestens einer Nachricht auslösen, die dem Fahrer ebenfalls signalisiert, das Steuerorgan (OC) zu betätigen.

5. Vorrichtung nach einem der Ansprüche 1 bis 4, **dadurch gekennzeichnet, dass** die Steuermittel (MC) die Lieferung einer Nachricht vom Texttyp, die von mindestens einem Anzeigebildschirm (EA) des Fahrzeugs (V) anzuzeigen ist, und/oder einer Nachricht vom Audiotyp, die von mindestens einem Lautsprecher (HP) des Fahrzeugs (V) abzuspielen ist, auslösen, wenn sie den zweiten Befehl empfangen.

6. Vorrichtung nach einem der Ansprüche 1 bis 5, **dadurch gekennzeichnet, dass** das Bedienelement (OC) aus einem Druckknopf, einem Rädchen, einem Hebel, einem Paddel, zwei Paddeln und einer Berührungstaste ausgewählt ist.

7. Fahrzeug (V), das eine autonome Fahrfunktion bietet, **dadurch gekennzeichnet, dass** es eine Steuervorrichtung (DC) nach einem der vorhergehenden Ansprüche umfasst.

8. Fahrzeug nach Anspruch 7, **dadurch gekennzeichnet, dass** es vom Typ Automobil ist.

## Claims

1. A control device (DC) for controlling the activation/deactivation of an autonomous driving function within a partially autonomous driving vehicle (V), said device (DC) comprising a control member (OC) generating a first command suitable for activating said function when it is operated by a driver of said vehicle (V), said control member (OC) generating a second command when it is operated by said driver when said autonomous driving function is active, and comprising control means (MC) which, when receiving said second command, trigger the supply of at least one message signalling to said driver each operation to be performed in order to resume at least partial control of said driving, and then authorise said resumption of control when each signalled operation has been performed by said driver, control means (MC) which, when receiving said second command, trigger the supply of at least one message signalling to said driver each operation to be carried out in order to resume at least partial control of said driving, and then allow said resumption of control when each signalled operation has been carried out by said driver, **characterised in that** said control means (MC) trigger the supply of at least one message signalling to said driver to grasp a steering wheel (VV) of said vehicle (V) with at least one hand and to exert pressure on at least one pedal of said vehicle (V) when said vehicle (V) is travelling at a speed lower than a predefined threshold

2. Device according to claim 1, **characterised in that** said control means (MC) allow said control resumption when each signalled operation has been performed by said driver within a predefined time interval.

3. Device according to claim 2, **characterised in that** said predefined time interval is between zero seconds and ten seconds.

4. Device according to any of the preceding claims, **characterised in that** said control means (MC) trigger the provision of at least one message also signalling to said driver to operate said control member (OC).

5. Device according to one of the claims 1 to 4, **characterised in that** said control means (MC) trigger the provision of a message of textual type to be displayed by at least one display screen (EA) of said vehicle (V) and/or of a message of audio type to be broadcast by at least one loudspeaker (HP) of said vehicle (V), when they receive said second command

6. Device according to one of the claims 1 to 5, **characterised in that** said control member (OC) is selected from a push button, a knob, a lever, a paddle, two paddles, and a tactile key.

7. Vehicle (V) offering an autonomous driving function, **characterised in that** it comprises a control device (DC) according to one of the preceding claims.

8. Vehicle according to claim 7, **characterised in that** it is of the automotive type.
